(19) Europäisches Patentamt
European Patent Office
Office européen des brevets

(11) **EP 3 297 881 B1**

(12) **EUROPÄISCHE PATENTSCHRIFT**

(45) Veröffentlichungstag und Bekanntmachung des Hinweises auf die Patenterteilung:
**19.08.2020 Patentblatt 2020/34**

(21) Anmeldenummer: **16719806.8**

(22) Anmeldetag: **19.04.2016**

(51) Int Cl.:
**B60W 10/18** (2012.01)

(86) Internationale Anmeldenummer:
**PCT/EP2016/058620**

(87) Internationale Veröffentlichungsnummer:
**WO 2016/184630 (24.11.2016 Gazette 2016/47)**

(54) **VERFAHREN UND VORRICHTUNG ZUR DETEKTION EINER AKTIVIERTEN BREMSE EINES FAHRZEUGS**

METHOD AND DEVICE FOR DETECTING AN ACTIVATED BRAKE OF A VEHICLE

PROCÉDÉ ET DISPOSITIF DE DÉTECTION D'UN FREIN ACTIF SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2015 DE 102015209093**

(43) Veröffentlichungstag der Anmeldung:
**28.03.2018 Patentblatt 2018/13**

(73) Patentinhaber: **Robert Bosch GmbH**
**70442 Stuttgart (DE)**

(72) Erfinder:
• **GREINER, Rinaldo**
**72762 Reutlingen (DE)**
• **BAUMGAERTNER, Daniel**
**72070 Tuebingen (DE)**

(56) Entgegenhaltungen:
WO-A1-2014/099060     US-A1- 2005 159 861
US-A1- 2012 330 522     US-A1- 2013 192 937
US-A1- 2013 256 053

EP 3 297 881 B1

**Beschreibung**

Stand der Technik

Die Erfindung betrifft ein Verfahren und eine Vorrichtung zur Detektion einer aktivierten Bremse eines sich fortbewegenden Fahrzeugs. Dabei soll die Detektion insbesondere bereits bei der Anfahrt des Fahrzeugs stattfinden, um möglichst umgehend darauf reagieren zu können.

Insbesondere bei Fahrzeugen mit einer Feststellbremse besteht die Gefahr, dass das Fahrzeug trotz aktivierter Feststellbremse bewegt wird. Dies führt dazu, dass der Verschleiß der Feststellbremse sehr stark ansteigt und zudem noch ein erhöhter Kraftaufwand zur Bewegung des Fahrzeugs nötig ist, im Vergleich zum Kraftaufwand, der nötig ist, um das Fahrzeug ohne aktivierte Feststellbremse zu bewegen. Wird das Fahrzeug mittels eines Motors in Bewegung versetzt oder aber der Fahrer beim Pedalieren durch einen Motor unterstützt, wie dies beispielsweise bei E-Bikes bzw. Pedelecs und insbesondere bei Lastenfahrrädern der Fall ist, führt eine aktivierte Feststellbremse zudem zu einem erhöhten Energiebedarf des Motors.

In der Offenlegungsschrift DE 10 2011 003 183 A1 ist ein Verfahren zur Überwachung der Funktion einer Feststellbremse in einem Fahrzeug offenbart. In dieser Schrift wird nach dem Betätigen der Feststellbremse der Bewegungszustand des Fahrzeugs überwacht und im Falle einer Fahrzeugbewegung ein Warnsignal ausgegeben. Dabei wird das Betätigen der Feststellbremse anhand der von der Feststellbremse ausgeübten Klemmkraft überwacht.

Die Patentschrift JP 06186141 offenbart ebenfalls ein Gerät zur Ausgabe eines Warnsignals bei angezogener Feststellbremse und gleichzeitiger Bewegung des Fahrzeugs. Hierbei wird der Zustand der Feststellbremse mittels eines Feststellbremsensensors ermittelt, welcher die auf den Seilzug der Bremse wirkende Kraft misst und daraus den Zustand der Festellbremse folgert.

Offenbarung der Erfindung

Die Erfindung betrifft ein Verfahren und eine Vorrichtung zur Detektion einer aktivierten Bremse eines Fahrzeugs. Zuerst wird geprüft, ob das Fahrzeug in Bewegung ist, indem die Fahrzeuggeschwindigkeit erfasst und die Fahrzeuggeschwindigkeit anschließend mit einer Minimalgeschwindigkeit verglichen wird. Ist die Fahrzeuggeschwindigkeit größer als die Minimalgeschwindigkeit, wird daraufhin das von mindestens einem Antrieb des Fahrzeugs für den Vortrieb geleistete Gesamtdrehmoment erfasst und im Anschluss daran in Abhängigkeit von der Fahrzeuggeschwindigkeit und dem Gesamtdrehmoment die Bestimmung einer auf das Fahrzeug wirkenden Bremskraft durchgeführt. Anschließend wird die bestimmte Bremskraft mit einem ersten Schwellenwert verglichen. Liegt die Bremskraft über dem ersten Schwellenwert wird daraufhin ein Signal erzeugt, welches eine aktivierte Bremse repräsentiert.

Vorteilhaft ist hierbei, dass durch den Vergleich der Bremskraft mit dem ersten Schwellenwert erkannt werden kann, ob die Bremse möglicherweise aktiviert ist. Zudem kann die Bremskraft anhand von Betriebsgrößen des Fahrzeugs bestimmt werden. Das bei Erkennung einer aktivierten Bremse erzeugte Signal, kann dann genutzt werden, um beispielsweise den Benutzer über die aktivierte Bremse zu informieren, oder aber um die Anzahl der Fahrten mit aktivierter Bremse für spätere Servicezwecke festzuhalten.

Eine vorteilhafte Ausgestaltung des erfindungsgemäßen Verfahrens sieht vor, dass die Leistung eines Antriebsmotors des Fahrzeugs reduziert wird, wenn die Bremskraft größer als ein zweiter Schwellenwert ist. Hierbei ist der zweite Schwellenwert größer als der erste Schwellenwert.

Vorteilhaft ist hierbei, dass der Verschleiß von Antriebsmotor und Bremse verringert werden, wenn eine aktivierte Bremse vermutet wird. Dabei muss die Bedingung erfüllt sein, dass die Bremskraft größer als der zweite Schwellenwert und somit auch größer als der erste Schwellenwert ist. Dies ist von Vorteil, da bei einer höheren Bremskraft die Wahrscheinlichkeit steigt, dass die Bremse aktiviert ist.

Eine weitere vorteilhafte Ausgestaltung des erfindungsgemäßen Verfahrens sieht vor, dass die Leistung des Antriebsmotors in Abhängigkeit der Größe der Bremskraft $F_B$ reduziert wird.

Vorteilhaft ist hierbei, dass bei einer größeren Bremskraft, die Leistung des Antriebsmotors stärker reduziert werden kann, da ansonsten bei einer erhöhten Bremskraft ein erhöhter Verschleiß von Antriebsmotor und Bremse erfolgen würde.

Eine weitere vorteilhafte Ausgestaltung des erfindungsgemäßen Verfahrens sieht vor, dass ein erstes Drehmoment, welches von einem Fahrer geleistet wird, und ein zweites Drehmoment, welches von einem Motorantrieb geleistet wird, erfasst werden. Hierbei bildet die Summe aus dem ersten Drehmoment und dem zweiten Drehmoment das Gesamtdrehmoment.

Vorteilhaft ist hierbei, dass auch zwei voneinander getrennte Antriebe, wie dies beispielsweise E-Bikes oder ein Lastenfährrader aufweisen, berücksichtigt werden.

Gemäß einer vorteilhaften Ausgestaltung der erfindungsgemäßen Verfahrens ist vorgesehen, dass zusätzlich

-   eine Gesamtmasse des Fahrzeugs, umfassend eine Masse des Fahrzeugs, der Beladung und des Nutzers des Fahrerzeugs, und/oder

- eine Beschleunigung des Fahrzeugs, und/oder
- eine Steigung einer Fahrbahn, auf der sich das Fahrzeug fortbewegt, und/oder
- eine Drehzahl eines Antriebs des Fahrzeugs, und/oder
- ein Rollwiderstand, welcher zwischen dem Fahrzeug und dem Fahrbahnbelag auftritt, und/oder
- ein Windwiderstands, welcher bei der Fahrt auf das Fahrzeug wirkt,

erfasst und in Abhängigkeit davon die Bremskraft bestimmt wird.

Vorteilhaft ist hierbei, dass die Bremskraft entweder mit einer erhöhten Genauigkeit oder aber mit einem verringerten Aufwand und somit schnelleren Ergebnis bestimmt werden kann.

Die Erfindung betrifft zudem ein Fahrzeug, insbesondere ein Zweirad und besonders bevorzugt ein Lastenfahrrad, mit einer erfindungsgemäßen Vorrichtung zur Detektion einer aktivierten Bremse oder mit einem Steuergerät, welches ein erfindungsgemäßes Verfahren zur Detektion einer aktivierten Bremse ausführt.

Zeichnungen

Fig. 1 zeigt ein Ausführungsbeispiel eines erfindungsgemäßen Betriebsverfahrens.

Fig. 2 zeigt eine detaillierte Ausgestaltung der Bestimmung der Bremskraft, wie sie z. B. im ersten Ausführungsbeispiel nach Fig. 1 durchgeführt werden kann.

Fig. 3 zeigt ein Ausführungsbeispiel einer erfindungsgemäßen Vorrichtung.

Beschreibung von Ausführungsbeispielen

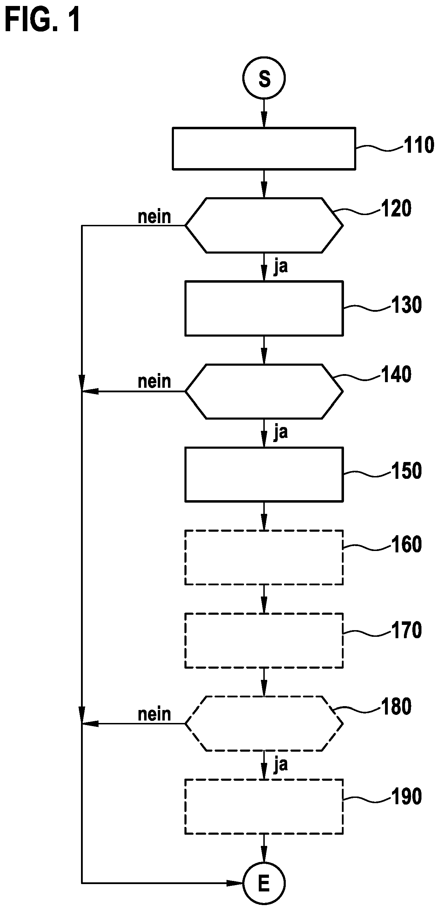

Fig. 1 zeigt ein Ausführungsbeispiel eines erfindungsgemäßen Betriebsverfahrens zur Detektion einer aktivierten Bremse eines Fahrzeugs. Das Fahrzeug kann beispielsweise ein Zweirad und insbesondere ein Lastenfahrrad sein. Beim Verfahren wird in einem Verfahrensschritt 110 die Fahrzeuggeschwindigkeit $v$ erfasst. Anschließend wird in einem Verfahrensschritt 120 die Fahrzeuggeschwindigkeit $v$ mit einer Minimalgeschwindigkeit $v_{min}$ verglichen. Der Wert für die Minimalgeschwindigkeit $v_{min}$ wird dabei vor diesem Vergleich festgelegt. Dieser Wert wird vorzugsweise zu Null gewählt, um somit bereits eine minimale Bewegung des Fahrzeugs, welche auf ein Anfahren des Fahrzeugs hindeutet, durch den Vergleich erkennen zu können. Ergibt der Verfahrensschritt 120, dass die Fahrzeuggeschwindigkeit $v$ größer als die Minimalgeschwindigkeit $v_{min}$ ist, wird in einem Verfahrensschritt 130 ein von mindestens einem Antrieb des Fahrzeugs für den Vortrieb geleistetes Gesamtdrehmoment $M_{Ges}$ erfasst und anschließend die auf das Fahrzeug wirkenden Bremskraft $F_B$ bestimmt. Als Antrieb wird beispielsweise bei einem Zweirad die Trittkraft des Fahrers verstanden, wobei das Gesamtdrehmoment $M_{Ges}$ demzufolge vom Fahrer geleistet wird und über die Pedale und die Tretkurbeln auf das Kettenblatt wirkt. Das Gesamtdrehmoment $M_{Ges}$ kann sich jedoch, wie beispielsweise bei einem Lastenfahrrad, auch aus einem ersten Drehmoment $M_F$ eines ersten Antriebs und einem zweiten Drehmoment $M_M$ eines zweiten Antriebs zusammensetzen. Das erste Drehmoment $M_F$ stellt hierbei das Drehmoment dar, welches von einem Fahrer geleistet wird. Das zweite Drehmoment $M_M$ stellt dagegen das Drehmoment dar, welches von einem Antriebsmotor 352 des Fahrzeugs als zweiter Antrieb geleistet wird. Die Bremskraft $F_B$ wird hierbei in Abhängigkeit der Fahrzeuggeschwindigkeit $v$ und dem Gesamtdrehmoment $M_{Ges}$ bestimmt. Nach der Bestimmung der Bremskraft $F_B$ im Verfahrensschritt 130 wird in einem Verfahrensschritt 140 die bestimmte Bremskraft $F_B$ mit einem ersten Schwellenwert S1 verglichen. Dieser erste Schwellenwert S1 kann hierbei beispielsweise Null sein, wodurch in dem im Verfahrensschritt 140 durchgeführten Vergleich bereits eine minimale Bremskraft $F_B$ ausreicht, um einen Unterschied erkennbar zu machen. Ergibt der im Verfahrensschritt 140 durchgeführte Vergleich, dass die Bremskraft $F_B$ größer als der erste Schwellenwert S1 ist, wird in einem Verfahrensschritt 150 ein Signal 300 erzeugt, welches eine aktivierte Bremse darstellt. Das Signal 300 ist dabei beispielsweise ein binäres Signal, wobei ein High-Zustand eine aktivierte Bremse und ein Low-Zustand eine deaktivierte Bremse repräsentiert.

Anschließend kann optional in einem Verfahrensschritt 160 ein Zählwerk 208 hochgezählt werden, wenn das Signal 300 im Verfahrensschritt 150 erzeugt wurde. Hierdurch kann zu einem späteren Zeitpunkt überprüft werden, ob und wie oft die Feststellbremse während der Fahrt aktiviert war. Des Weiteren kann daraufhin optional noch ein Verfahrensschritt 170 durchgeführt werden. Im Verfahrensschritt 170 wird das Signal 300 nach außen hin ausgegeben, wenn dieses zuvor im Verfahrensschritt 150 erzeugt wurde. Das Signal 300 dient dann als Warnsignal und kann dazu genutzt werden, den Fahrer des Fahrzeugs auf die aktivierte Bremse hinzuweisen. Dieser kann auf den Hinweis entsprechend reagieren, z. B. indem er die Bremse löst oder das Fahrzeug zum Stehen bringt. Daraufhin kann optional noch ein Verfahrensschritt 180 durchgeführt werden, bei welchem die Bremskraft $F_B$ mit einem zweiten Schwellenwert S2 verglichen wird. Der zweite Schwellenwert S2 ist dabei größer als der erste Schwellenwert S1. Ergibt der im Verfahrensschritt 180 durchgeführte Vergleich, dass die Bremskraft $F_B$ größer als der zweite Schwellenwert S2 ist, wird in einem Verfahrensschritt 190 die Leistung des Antriebmotors 352 des Fahrzeugs reduziert. Dabei kann das Maß der Reduzierung in Abhängigkeit der Größe der Bremskraft $F_B$ erfolgen. So kann bei einer größeren Bremskraft $F_B$ die Leistung des Antriebsmotors 352 stärker reduziert werden, als wenn die Bremskraft $F_B$ kleiner ist. Das Verhältnis zwischen Maß der Reduzierung und Größe der Bremskraft $F_B$ ist hierbei beliebig einstellbar. Alternativ kann im Verfahrensschritt 190 der Antriebsmotor 352 auch derartig angesteuert werden, dass dieser überhaupt keine Leistung mehr erbringt, wenn die Bremskraft $F_B$ größer als der zweite Schwellenwert S2 ist. Nach dem Verfahrensschritt 190 wird das Verfahren beendet. Ebenso wird das Verfahren direkt beendet, sobald einer der in den Verfahrensschritten 120, 140 und 180 durchgeführten Vergleiche ein negatives Ergebnis ergibt.

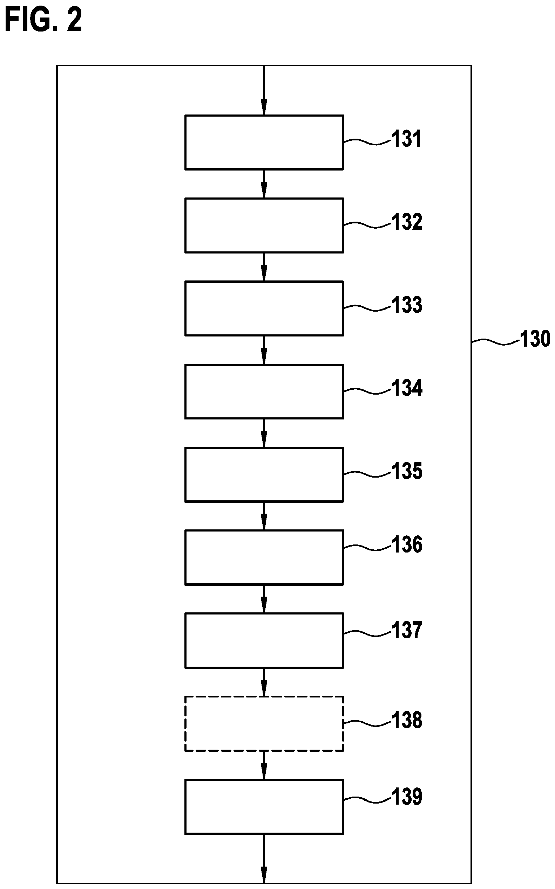

Fig. 2 zeigt eine detaillierte Ausgestaltung der Bestimmung der Bremskraft, wie sie z. B. im ersten Ausführungsbeispiel nach Fig. 1 durchgeführt werden kann. Bei der Bestimmung der Bremskraft $F_B$ im Verfahrensschritt 130 kann eine Vielzahl von variablen und konstanten Betriebsgrößen mit einfließen, je nachdem wie exakt die Bremskraft $F_B$ bestimmt werden soll. Diese Betriebsgrößen sind dabei entweder bereits vor dem Start des Verfahren bekannt, beispielsweise durch Herstellerangaben, oder aber müssen gezielt während dem Verfahren erfasst werden.

Für die Bestimmung der Bremskraft $F_B$ wird ausgehend vom 2. Newtonschen Gesetz folgende leistungsbasierte Gleichung erhalten:

$$P_{Antrieb} = P_{Umgebung} \qquad\qquad (1)$$

woraus folgt:

$$2\pi \cdot M_{Ges} \cdot n_{Antrieb} = v \cdot F_{Ges} \qquad\qquad (2)$$

wobei $M_{Ges}$ das durch den mindestens einen Antrieb geleistete Gesamtdrehmoment, $n_{Antrieb}$ die Drehzahl des Antriebs, das heißt hier beispielsweise die Drehzahl des Kettenblatts $n_{Kettenblatt}$, v die Geschwindigkeit des Fahrzeugs und $F_{Ges}$ die auf das Fahrzeug wirkenden Gesamtkräfte ist.

Bei der Gleichung (2) können dabei das Gesamtmoment $M_{Ges}$ und die Gesamtkraft $F_{Ges}$ folgendermaßen aufgeschlüsselt werden:

$$2\pi\left(M_F + M_M \cdot i_g\right) \cdot n_{Kettenblatt} = v \cdot \left(m(a + g\alpha) + F_R + F_W + F_B\right) \qquad (3)$$

Hierbei ist das Gesamtdrehmoment $M_{Ges}$ aus einem ersten Drehmoment $M_F$, welches vom Fahrer geleistet und über die Pedale und die Tretkurbeln auf das Kettenblatt übertragen wird, und einem zweiten Drehmoment $M_M$, welches von einem Antriebsmotor 352 geleistet und mit einer Getriebeübersetzung $i_g$ auf das Kettenblatt übertragen wird, zusammengesetzt. Zudem ist m die Gesamtmasse des Fahrzeugs, a die Beschleunigung des Fahrzeugs, g die Gravitationskonstante, $\alpha$ die Steigung der Fahrbahn auf der das Fahrzeug sich fortbewegt, $F_R$ der Rollwiderstand zwischen dem sich bewegenden Fahrzeug und dem Fahrbahnbelag, Fw der Windwiderstand und $F_B$ die Bremskraft.

Um folglich die Bremskraft $F_B$ bestimmen zu können, lässt sich die Gleichung (3) derartig umformulieren:

$$F_B = \frac{n_{Kettenblatt}}{v}\left(2\pi\left(M_F + M_M \cdot i_g\right)\right) - v \cdot \left(m(a + g\alpha) + F_R + F_W\right) \qquad (4)$$

Der Quotient aus der Drehzahl des Kettenblatts $n_{Kettenblatt}$ und der Fahrzeuggeschwindigkeit v stellt hierbei den aktuell eingelegten Gang dar.

Zum Bestimmen der Bremskraft $F_B$ nach Gleichung (4) im Verfahrensschritt 130 wird im Verfahrensschritt 131 die Antriebsdrehzahl $n_{Antrieb}$, das heißt hier die Drehzahl des Kettenblatts $n_{Kettenblatt}$, erfasst. Dies liegt darin begründet, dass sowohl das erste Drehmoment $M_F$ als auch das zweite Drehmoment $M_M$ auf das Kettenblatt wirken, wobei eine jeweilige Getriebeübersetzung beachtet werden muss.

Zudem ist die Fahrzeuggeschwindigkeit v bereits bekannt, da sie zu Beginn des Verfahrens im ersten Verfahrensschritt 110 erfasst wurde.

Des Weiteren werden das erste Drehmoment $M_F$ im Verfahrensschritt 132 und das zweite Drehmoment $M_M$

im Verfahrensschritt 133 erfasst.

Die Größe Getriebeübersetzung $i_g$ ist dagegen üblicherweise bereits vor der Bestimmung der Bremskraft $F_B$ bekannt und muss beispielsweise lediglich vom Motorsteuergerät abgegriffen werden, was ebenfalls im Verfahrensschritt 132 durchgeführt werden kann.

Die Gesamtmasse m des Fahrzeugs wird im Verfahrensschritt 134 entweder erfasst oder von einem Speicher 206 abgerufen. Optional kann auch die Gleichung (3) nach der Gesamtmasse m aufgelöst werden und wenn alle anderen Betriebsgrößen bis auf die Gesamtmasse m bekannt sind sowie wenn die Bremskraft gleich Null ist, das heißt, dass aktuell keine Bremsung erfolgt, kann die Gesamtmasse m aus der umgestellten Gleichung (3) im Verfahrensschritt 134 bestimmt werden.

Die Beschleunigung a wird im Verfahrensschritt 135 und die Steigung $\alpha$ wird im Verfahrensschritt 136 erfasst.

Im Verfahrensschritt 137 wird der Rollreibungskoeffizient $\mu$, welcher einmalig vor Beginn des Verfahrens in einem Speicher 206, beispielsweise in Form einer Datentabelle, hinterlegt wurde, aus dem Speicher 206 abgerufen und daraus der Rollwiderstand $F_R$ bestimmt. Ein typischer Wert für den Rollreibungskoeffizienten $\mu$ beträgt beispielsweise für einen Reifen auf Asphalt zwischen 0,011 und 0,015 und unterscheidet sich für andere Untergründe geringfügig. Der Rollreibungskoeffizient $\mu$ wird dabei entweder durch den Hersteller voreingestellt oder alternativ vom Fahrer aus der Datentabelle oder aufgrund anderer Betriebsparameter online ausgewählt.

Der Windwiderstand $F_W$ wird optional im Verfahrensschritt 138 bestimmt. Alternativ kann die Bestimmung des Windwiderstands Fw auch vollständig vernachlässigt werden, da dieser aufgrund der geringen Geschwindigkeit beim Anfahren des Fahrzeugs gegen Null geht.

Abschließend wird im Verfahrensschritt 139 die Bremskraft $F_B$ mittels der erfassten und abgerufenen Betriebsgrößen auf Basis der Gleichung (4) bestimmt.

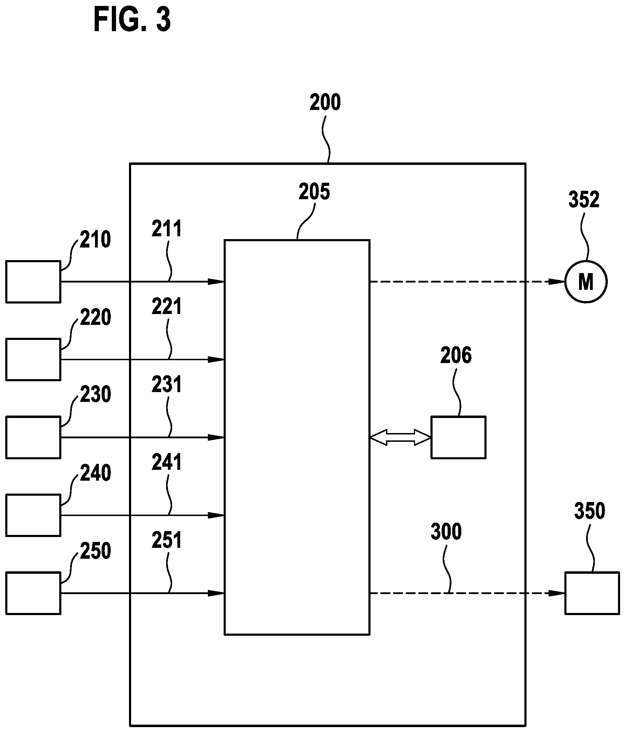

Fig. 3 zeigt ein Ausführungsbeispiel einer erfindungsgemäßen Vorrichtung. Die Vorrichtung 200, beispielsweise ein Steuergerät, weist ein erstes Mittel 205, beispielsweise einen Mikrocontroller, auf. Des Weiteren weist die Vorrichtung 200 einen Speicher 206 auf. Das erste Mittel 205 kann mit einem Geschwindigkeitssensor 210, einem Drehmomentsensor 220, einem Beschleunigungssensor 230 und/oder einem Neigungssensor 240 verbunden sein. Dabei kann die Verbindung zwischen dem ersten Mittel 205 und den Sensoren 210, 220, 230 und 240 sowohl kabelgebunden als auch drahtlos ausgestaltet sein. Der Geschwindigkeitssensor 210 ist dazu eingerichtet, ein Fahrzeuggeschwindigkeitssignal 211 zu erfassen und an das erste Mittel 205 zu senden. Der Drehmomentsensor 220 ist dazu eingerichtet, ein Gesamtdrehmomentsignal 221 zu erfassen und an das erste Mittel 205 zu senden. Hierbei kann es nötig sein, dass der Drehmomentsensor 220 zwei Einzelsensoren aufweist, wobei einer das vom Fahrer geleistete erste Drehmoment $M_F$ und der andere das vom Antriebsmotor 352 geleistete zweite Drehmoment $M_M$ erfasst. Der Beschleunigungssensor 230 ist dazu eingerichtet, ein Beschleunigungssignal 231 des Fahrzeugs zu erfassen und an das erste Mittel 205 zu senden. Alternativ kann das Beschleunigungssignal 231 auch aus dem Fahrzeuggeschwindigkeitssignal 220 ermittelt werden. Der Neigungssensor 235 ist dazu eingerichtet, ein Steigungssignal 236 zu erfassen und an das erste Mittel 205 zu senden. Der Drehzahlsensor 240 ist dazu eingerichtet, ein Antriebsdrehzahlsignal 241, hier die Drehzahl des Kettenblatts, zu erfassen und an das erste Mittel 205 zu senden. Optional ist das erste Mittel 205 mit einem Gewichtssensor 250 verbunden, welcher dazu eingerichtet ist, ein erstes

Gewichtssignal 251 der Masse des Fahrers oder auch der Beladung zu erfassen und an das erste Mittel 205 zu senden. Alternativ können für diese beiden Werte auch Durchschnittswerte im Speicher 206 abgespeichert werden, z. B. sind für die Masse einer Person 70kg ein typischer Durchschnittswert, oder aber diese Werte werden durch den Fahrzeugführer im Speicher 206 abgespeichert. Des Weiteren ist der Speicher 206 dazu eingerichtet, den Rollreibungskoeffizient $\mu$, beispielsweise als Datentabelle, abzuspeichern. Zudem ist der Speicher 206 dazu eingerichtet, den ersten Schwellenwert S1 und den zweiten Schwellenwert S2 für den Vergleich mit der Bremskraft $F_B$ abzuspeichern. Außerdem ist der Speicher 206 dazu eingerichtet, die für die Bestimmung des Windwiderstands $F_W$ nötigen, konstanten Werte, insbesondere die Strömungskonstante $c_W$, die Dichte $\rho$ der Luft und die Bezugsfläche A des Fahrzeugs, abzuspeichern. Das erste Mittel 205 ist dazu eingerichtet, die im Speicher 206 abgespeicherten Werte und Größen bei Bedarf abzurufen.

Das erste Mittel 205 ist dazu eingerichtet, das Verfahren nach Fig. 1 und Fig. 2 durchzuführen. So ist das erste Mittel 205 dazu eingerichtet, anhand der von den Sensoren 210, 220, 230, 240 und 250 empfangenen Signalen 211, 221, 231, 241 und 251 und den vom Speicher 206 abgerufenen Werten und Betriebsgrößen die auf das Fahrzeug wirkende Bremskraft $F_B$ zu bestimmen. Zudem ist das erste Mittel 205 dazu eingerichtet, einen Vergleich der bestimmten Bremskraft $F_B$ mit dem ersten Schwellenwert S1 und optional noch mit dem zweiten Schwellenwert S2 durchzuführen. Das erste Mittel 205 ist außerdem dazu eingerichtet, ein Signal 300 zu erzeugen, wenn die Bremskraft $F_B$ größer als der erste Schwellenwert S1 ist. Das Signal 300 repräsentiert eine aktivierte Bremse. Das erste Mittel 205 ist des Weiteren dazu eingerichtet sein, das Signal 300 intern in der Vorrichtung 200 zu verarbeiten und/oder es zu nutzen, um es nach außen hin als Warnsignal auszugeben. Um das Signal 300 nach außen hin auszugeben, ist das erste Mittel 205 vorzugsweise mit einem zweiten Mittel 350 verbunden. Das zweite Mittel 350 ist dazu eingerichtet, das Signal 300 an den Benutzer auszugeben. Das Signal 300 kann hierbei beispielsweise optisch und/oder akustisch an den Fahrer ausgegeben werden, um diesen auf die aktive Bremse hinzuweisen. Als optische Rückmeldung wäre beispielsweise eine Warnleuchte oder ein Display denkbar.

Eine akustische Weitergabe des Warnsignals wäre beispielsweise über einen Lautsprecher möglich, welcher einen Ton abgibt oder eine Sprachnachricht abspielt. Alternativ könnte ein Warnsignal auch haptisch ausgegeben werden, beispielsweise in dem eine Vibration an den Pedalen oder am Griff des Fahrzeugs erzeugt werden, wobei dies nicht bildlich dargestellt ist. Ein Vibrieren der Pedale ließe sich beispielsweise über eine geeignete Ansteuerung des Antriebsmotors 352 realisieren.

Optional ist das erste Mittel 205 dazu eingerichtet, einen Antriebsmotor 352 des Fahrzeugs in seiner Leistung zu reduzieren, wenn ein Vergleich ergibt, dass die Bremskraft $F_B$ größer als der zweite Schwellenwert S2 ist. Insbesondere kann der Antriebsmotor 352 für den Fall, dass die Bremskraft $F_B$ größer als der zweite Schwellenwert S2 ist, auch ganz ausgeschaltet werden.

**Patentansprüche**

1. Verfahren zur Detektion einer aktivierten Bremse eines Fahrzeugs mit folgenden Verfahrensschritten:

   a. Erfassen (110) der Fahrzeuggeschwindigkeit v,
   b. Erfassen des von mindestens einem Antrieb des Fahrzeugs für den Vortrieb geleisteten Gesamtdrehmoments $M_{Ges}$,

   **gekennzeichnet durch** folgende, weitere Verfahrensschritte:

   c. Bestimmen (130) der auf das Fahrzeug wirkenden Bremskraft $F_B$ in Abhängigkeit der Fahrzeuggeschwindigkeit v und dem Gesamtdrehmoment $M_{Ges}$, wenn die Fahrzeuggeschwindigkeit v größer als eine Minimalgeschwindigkeit $v_{min}$ ist,
   d. Erzeugen (150) eines Signals (300), welches eine aktivierte Bremse repräsentiert, wenn die Bremskraft $F_B$ größer als ein erster Schwellenwert S1 ist.

2. Verfahren nach Anspruch 1, **gekennzeichnet durch** folgenden Verfahrensschritt:
   e. Reduzieren (190) der Leistung eines Antriebsmotors (352) des Fahrzeugs, wenn die Bremskraft $F_B$ größer als ein zweiter Schwellenwert S2 ist, wobei der zweite Schwellenwert S2 größer als der erste Schwellenwert S1 ist.

3. Verfahren nach Anspruch 2, **dadurch gekennzeichnet, dass** im Verfahrensschritt e die Leistung des Antriebsmotors (352) in Abhängigkeit der Größe der Bremskraft $F_B$ reduziert wird.

4. Verfahren nach einem der Ansprüche 1 bis 3, **dadurch gekennzeichnet, dass** im Verfahrensschritt b ein erstes Drehmoment $M_F$, welches von einem Fahrer geleistet wird, und ein zweites Drehmoment $M_M$, welches von einem Antriebsmotor (352) geleistet wird, erfasst werden, wobei die Summe aus dem ersten Drehmoment $M_F$ und dem zweiten Drehmoment $M_M$ das Gesamtdrehmoment $M_{Ges}$ bilden.

5. Verfahren nach einem der Ansprüche 1 bis 4, **dadurch gekennzeichnet, dass** vor dem Verfahrensschritt c zusätzlich

   - eine Gesamtmasse m des Fahrzeugs, umfassend eine Masse des Fahrzeugs, der Beladung und des Nutzers des Fahrerzeugs, und/oder
   - eine Beschleunigung a des Fahrzeugs, und/oder
   - eine Steigung $\alpha$ einer Fahrbahn, auf der sich das Fahrzeug fortbewegt, und/oder
   - eine Drehzahl $n_{Antrieb}$ eines Antriebs des Fahrzeugs, und/oder
   - ein Rollwiderstand $F_R$, welcher zwischen dem Fahrzeug und dem Fahrbahnbelag auftritt, und/oder
   - ein Windwiderstands $F_W$, welcher bei der Fahrt auf das Fahrzeug wirkt,

   erfasst und im Verfahrensschritt c in Abhängigkeit davon die Bremskraft $F_B$ bestimmt wird.

6. Vorrichtung (200) zur Detektion einer aktivierten Bremse eines Fahrzeugs, mit einem ersten Mittel (205) in dem insbesondere ein Verfahren nach einem der Ansprüche 1 bis 5 abläuft, welches dazu eingerichtet ist, ein Fahrzeuggeschwindigkeitssignal (211) eines Geschwindigkeitssensors (210) und ein Gesamtdrehmomentsignal (221) von mindestens einem Drehmomentsensor (220) zu empfangen, **dadurch gekennzeichnet, dass** das erste Mittel (205) dazu eingerichtet ist, eine auf das Fahrzeug wirkende Bremskraft $F_B$ in Abhängigkeit der Fahrzeuggeschwindigkeit v und des Gesamtdrehmoments $M_{Ges}$ zu bestimmen, sowie dazu eingerichtet ist, ein Signal (300) zu erzeugen, welches eine aktivierte Bremse repräsentiert, wenn die Bremskraft $F_B$ größer als ein erster Schwellenwert S1 ist.

7. Vorrichtung nach Anspruch 6, **dadurch gekennzeichnet, dass** das erste Mittel (205) dazu eingerichtet ist, einen Antriebsmotor (352) des Fahrzeugs derartig anzusteuern, dass dieser in seiner Leistung reduziert wird, wenn die Bremskraft $F_B$ größer als ein zweiter Schwellenwert S2 ist.

8. Vorrichtung nach Anspruch 7, dass das erste Mittel (205) dazu eingerichtet ist, die Leistung des Antriebsmotors (352) in Abhängigkeit der Größe der Bremskraft $F_B$ zu reduzieren.

9. Vorrichtung nach einem der Ansprüche 6 bis 8, **dadurch gekennzeichnet, dass** das erste Mittel (205) dazu eingerichtet ist,

   - ein Beschleunigungssignal (231) des Fahrzeugs von einem Beschleunigungssensors (230), und/oder
   - ein Steigungssignal (236) einer Fahrbahn, auf der sich das Fahrzeug fortbewegt, von einem Neigungssensor (235), und/oder
   - ein Drehzahlsignal (241) eines Antriebs des Fahrzeugs von einem Drehzahlsensor (240), und/oder
   - ein erstes Gewichtssignal (251) der Masse des Nutzers und/oder der Beladung von einem Gewichtssensor (250)

   zu empfangen, und/oder Werte für die Masse des Fahrzeugs oder für die Gesamtmasse m von einem Speicher (206) abzurufen, sowie die Bremskraft $F_B$ zusätzlich in Abhängigkeit des Beschleunigungssignals (231) und/oder des Steigungssignals (236) und/oder des Antriebsdrehzahlsignals (241) und/oder des ersten Gewichtssignals (251) und/oder der Werte für die Masse des Fahrzeugs oder für die Gesamtmasse m zu bestimmen.

10. Fahrzeug, insbesondere ein Zweirad und besonders bevorzugt ein Lastenfahrrad, mit einer Vorrichtung zur Detektion einer aktivierten Bremse nach einem der Ansprüche 6 bis 9, oder mit einem Steuergerät, welches ein Verfahren nach einem der Ansprüche 1 bis 5 ausführt.

## Claims

1. Method for detecting an activated brake of a vehicle, comprising the following method steps:

   a. detecting (110) the vehicle speed v,
   b. detecting the total torque $M_{total}$ generated by at least one drive of the vehicle for propulsion,

   **characterized by** the following, further method steps:

   c. determining (130) the braking force $F_B$, which acts on the vehicle, depending on the vehicle speed v and the total torque $M_{total}$ when the vehicle speed v is greater than a minimum speed $v_{min}$,
   d. generating (150) a signal (300), which represents an activated brake, when the braking force $F_B$ is greater than a first threshold value S1.

2. Method according to Claim 1, **characterized by** the following method step:
   e. reducing (190) the power of a drive motor (352) of the vehicle when the braking force $F_B$ is greater than a second threshold value S2, wherein the second threshold value S2 is greater than the first threshold value S1.

3. Method according to Claim 2, **characterized in that** the power of the drive motor (352) is reduced in method step e depending on the magnitude of the braking force $F_B$.

4. Method according to one of Claims 1 to 3, **characterized in that** a first torque $M_F$, which is generated by a driver, and a second torque $M_M$, which is generated by a drive motor (352), are detected in method step b, wherein the sum of the first torque $M_F$ and the second torque $M_M$ form the total torque $M_{total}$.

5. Method according to one of Claims 1 to 4, **characterized in that**, before method step c,

   - a total mass m of the vehicle, comprising a mass of the vehicle, of the load and of the user of the vehicle, and/or
   - an acceleration a of the vehicle, and/or

- a gradient $\alpha$ of a roadway on which the vehicle is moving, and/or
- a rotation speed $n_{drive}$ of a drive of the vehicle, and/or
- a rolling resistance $F_R$ which occurs between the vehicle and the roadway surface, and/or
- a wind resistance Fw which acts on the vehicle during driving

are additionally detected and the braking force $F_B$ is determined depending on the above in method step c.

6. Apparatus (200) for detecting an activated brake of a vehicle, comprising a first means (205) in which, in particular, a method according to one of Claims 1 to 5 runs, which means is designed to receive a vehicle speed signal (211) of a speed sensor (210) and a total torque signal (221) from at least one torque sensor (220), **characterized in that** the first means (205) is designed to determine a braking force $F_B$, which acts on the vehicle, depending on the vehicle speed v and the total torque $M_{total}$, and also is designed to generate a signal (300), which represents an activated brake, when the braking force $F_B$ is greater than a first threshold value S1.

7. Apparatus according to Claim 6, **characterized in that** the first means (205) is designed to actuate a drive motor (352) of the vehicle in such a way that the power of the said drive motor is reduced when the braking force $F_B$ is greater than a second threshold value S2.

8. Apparatus according to Claim 7, **characterized in that** the first means (205) is designed to reduce the power of the drive motor (352) depending on the magnitude of the braking force $F_B$.

9. Apparatus according to one of Claims 6 to 8, **characterized in that** the first means (205) is designed to receive

- an acceleration signal (231) of the vehicle from an acceleration sensor (230) and/or
- a gradient signal (236) of a roadway on which the vehicle is moving from an inclination sensor (235), and/or
- a rotation speed signal (241) of a drive of the vehicle from a rotation speed sensor (240), and/or
- a first weight signal (251) of the mass of the user and/or of the load from a weight sensor (250),

and/or to call up values for the mass of the vehicle or for the total mass m from a memory (206), and also to determine the braking force $F_B$ additionally depending on the acceleration signal (231) and/or the gradient signal (236) and/or the drive rotation speed signal (241) and/or the first weight signal (251) and/or the values for the mass of the vehicle or for the total mass m.

10. Vehicle, in particular a two-wheeled vehicle and particularly preferably a cargo bicycle, comprising an apparatus for detecting an activated brake according to one of Claims 6 to 9, or comprising a controller which executes a method according to one of Claims 1 to 5.

**Revendications**

1. Procédé de détection d'un frein activé d'un véhicule, comprenant les étapes suivantes :

a. acquisition (110) de la vitesse du véhicule v,
b. acquisition du couple total $M_{Ges}$ fourni par au moins un mécanisme d'entraînement du véhicule pour la propulsion,

**caractérisé par** les étapes supplémentaires suivantes :

c. détermination (130) de la force de freinage $F_B$ agissant sur le véhicule en fonction de la vitesse du véhicule v et du couple total $M_{Ges}$ lorsque la vitesse du véhicule v est supérieure à une vitesse minimale $v_{min}$,
d. génération (150) d'un - signal (300) qui représente un frein activé lorsque la force de freinage $F_B$ est supérieure à une première valeur de seuil S1.

2. Procédé selon la revendication 1, **caractérisé par** l'étape suivante :
e. réduction (190) de la puissance d'un moteur d'entraînement (352) du véhicule lorsque la force de freinage $F_B$ est supérieure à une deuxième valeur de seuil S2, la deuxième valeur de seuil S2 étant supérieure à la première valeur de seuil S1.

3. Procédé selon la revendication 2, **caractérisé en ce qu'**à l'étape e, la puissance du moteur d'entraînement (352) est réduite en fonction de l'amplitude de la force de freinage $F_B$.

4. Procédé selon l'une des revendications 1 à 3, **caractérisé en ce qu'**à l'étape b, un premier couple $M_F$, qui est fourni par un conducteur, et un deuxième couple $M_M$, qui est fourni par le moteur d'entraînement (352), sont acquis, la somme du premier couple $M_F$ et du deuxième couple $M_M$ formant le couple total $M_{Ges}$.

5. Procédé selon l'une des revendications 1 à 4, **caractérisé en ce qu'**avant l'étape c, en plus

   - une masse totale m du véhicule, comprenant une masse du véhicule, du chargement et de l'utilisateur du véhicule, et/ou
   - une accélération a du véhicule, et/ou
   - une pente $\alpha$ d'une chaussée sur laquelle avance le véhicule, et/ou
   - une vitesse de rotation $n_{Antrieb}$ d'un mécanisme d'entraînement du véhicule, et/ou
   - une résistance au roulement $F_R$, qui se produit entre le véhicule et le revêtement de la chaussée, et/ou
   - une résistance du vent $F_W$, laquelle agit sur le véhicule lors du déplacement,

   sont acquises et la force de freinage $F_B$ est déterminée à l'étape c en fonction de celles-ci.

6. Dispositif (200) de détection d'un frein activé d'un véhicule, comprenant un premier moyen (205) dans lequel est notamment mis en œuvre un procédé selon l'une des revendications 1 à 5, lequel est conçu pour recevoir un signal de vitesse du véhicule (211), un signal de vitesse (210) et un signal de couple total (221) en provenance d'au moins un capteur de couple (220), **caractérisé en ce que** le premier moyen (205) est conçu pour déterminer une force de freinage $F_B$ agissant sur le véhicule en fonction de la vitesse du véhicule v et du couple total $M_{Ges}$, et aussi conçu pour générer un signal (300) qui représente un frein activé lorsque la force de freinage $F_B$ est supérieure à une première valeur de seuil S1.

7. Dispositif selon la revendication 6, **caractérisé en ce que** le premier moyen (205) est conçu pour commander un moteur d'entraînement (352) du véhicule de telle sorte que la puissance de celui-ci est réduite lorsque la force de freinage $F_B$ est supérieure à une deuxième valeur de seuil S2.

8. Dispositif selon la revendication 7, **caractérisé en ce que** le premier moyen (205) est conçu pour réduire la puissance du moteur d'entraînement (352) en fonction de l'amplitude de la force de freinage $F_B$.

9. Dispositif selon l'une des revendications 6 à 8, **caractérisé en ce que** le premier moyen (205) est conçu pour recevoir

   - un signal d'accélération (231) du véhicule en provenance d'un capteur d'accélération (230), et/ou
   - un signal de pente (236) d'une chaussée sur laquelle avance le véhicule en provenance d'un capteur d'inclinaison (235), et/ou
   - un signal de vitesse de rotation (241) d'un mécanisme d'entraînement du véhicule en provenance d'un capteur de vitesse de rotation (240), et/ou
   - un premier signal de poids (251) de la masse de l'utilisateur et/ou du chargement en provenance d'un capteur de poids (250),

   et/ou pour interroger des valeurs pour la masse du véhicule ou pour la masse totale m auprès d'une mémoire (206), ainsi que pour déterminer la force de freinage $F_B$ en plus en fonction du signal d'accélération (231) et/ou du signal de pente (236) et/ou du signal de vitesse de rotation (241) d'entraînement et/ou du premier signal de poids (251) et/ou des valeurs pour la masse du véhicule ou pour la masse totale m.

10. Véhicule, notamment un deux-roues et notamment de préférence une bicyclette de transport, comprenant un dispositif de détection d'un frein activé selon l'une des revendications 6 à 9, ou comprenant un contrôleur qui met en œuvre un procédé selon l'une des revendications 1 à 5.

# FIG. 1

# FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011003183 A1

- JP 06186141 B